# EUROPEAN PATENT SPECIFICATION

(11) **EP 3 147 907 B1**
(45) Date of publication and mention of the grant of the patent: **16.12.2020**
(21) Application number: 16190700.1
(22) Date of filing: 26.09.2016
(51) Int. Cl.: G11B 27/10, G11B 27/28, H04W 4/80

(54) **CONTROL METHOD AND APPARATUS FOR PLAYING AUDIO**
STEUERUNGSVERFAHREN UND -VORRICHTUNG ZUR WIEDERGABE VON AUDIO
PROCÉDÉ ET APPAREIL DE COMMANDE DE LECTURE AUDIO

(30) Priority: 25.09.2015 CN 201510622863
(43) Date of publication of application: 29.03.2017
(73) Proprietor: Xiaomi Inc., Beijing 100085 (CN)
(72) Inventor: TAN, Kangxi, Haidian District, Beijing 100085 (CN); SUN, Yongjian, Haidian District, Beijing 100085 (CN); LIANG, Xin, Haidian District, Beijing 100085 (CN)
(74) Representative: Reeve, Nicholas Edward

(56) References cited:
- WO-A1-97/36391
- WO-A2-2007/085267
- WO-A2-2010/117213
- CN-A- 104 112 459
- GB-A- 2 456 835
- JP-A- 2001 111 970
- US-A1- 2005 015 795
- US-A1- 2008 089 665
- US-A1- 2014 178 034
- US-A1- 2014 248 036

## Description

### TECHNICAL FIELD

The present disclosure relates to the field of multi-media technology, and more particularly, to a control method and a control apparatus for playing an audio.

### BACKGROUND

There have been various devices with an audio playing function on the market, for example, a mobile phone, a tablet computer, a television, a speaker and other devices with an audio playing function. Such devices typically provide a user with excellent audio-visual experience.

In the related art, the electronic device may directly play audio data in the audio file using a default audio output channel when obtaining a playing instruction corresponding to any audio or video file. However, the above audio playing mode is too simple and it is easy to affect the surrounding persons. For example, if the user indicates to play a video file in the middle of the night, and the default audio output channel is a high-power speaker, it will affect the normal rest of other family members or neighbors. Published US patent application no. US2014/178034A1 discloses an apparatus and method for controlling an external device to playback a portion of media content. Published US patent application no. US2014/248036A1 discloses a method for identifying playback devices and identifying user preferences and device settings for audio file playback. Published Chinese patent application no. CN104112459A discloses a method for adjusting the volume of playback of media content dependent on predefined time periods. Published UK application no. GB2456835A discloses a method for recording media content in a format that includes control information for controlling the reproduction of the media content. US 2005/015795 A1 discloses muting commercial advertisements, which are determined by detecting e.g. one or more black frames. Finally, WO 2007/085267 A2 discloses restricting the playback of audio by controlling the volume of the audio under certain conditions, which include the time of the day, audio content characteristics and user preferences.

### SUMMARY OF THE INVENTION

In order to overcome problems in the related art, embodiments of the present disclosure provide a control method and a control apparatus for playing an audio. The invention itself is defined by the independent claims to which reference is now made. Advantageous features are set out in the dependent claims.

An advantage of embodiments of the present disclosure is that the problem of an audio playing mode being too simple and allowing the surrounding persons to be easily affected may be overcome, thus achieving technical effects of further intellectualization of audio playing under a control of audio playing according to the real situation.

It is to be understood that both the foregoing general description and the following detailed description are exemplary and explanatory only and are not restrictive of the present disclosure.

### BRIEF DESCRIPTION OF THE DRAWINGS

The accompanying drawings, which are incorporated in and constitute a part of this specification, illustrate embodiments consistent with the present disclosure and, together with the description, serve to explain the principles of the present disclosure.
Fig. 1 is a schematic diagram illustrating an implementation environment according to an exemplary embodiment;
Fig. 2 is a flow chart showing a control method for playing an audio according to an exemplary embodiment;
Fig. 3A is a flow chart showing a control method for playing an audio according to another exemplary embodiment;
Fig. 3B is a schematic diagram illustrating a channel setting interface involved in the embodiment shown in Fig. 3A;
Fig. 3C is a schematic diagram illustrating a display interface for prompting a message involved in the embodiment shown in Fig. 3A;
Fig. 4 is a block diagram showing a control apparatus for playing an audio according to an exemplary embodiment;
Fig. 5 is a block diagram showing a control apparatus for playing an audio according to another exemplary embodiment;
Fig. 6 is a block diagram showing a device according to an exemplary embodiment.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the present disclosure. Instead, they are merely examples of apparatuses and methods consistent with aspects related to the present disclosure as recited in the appended claims.

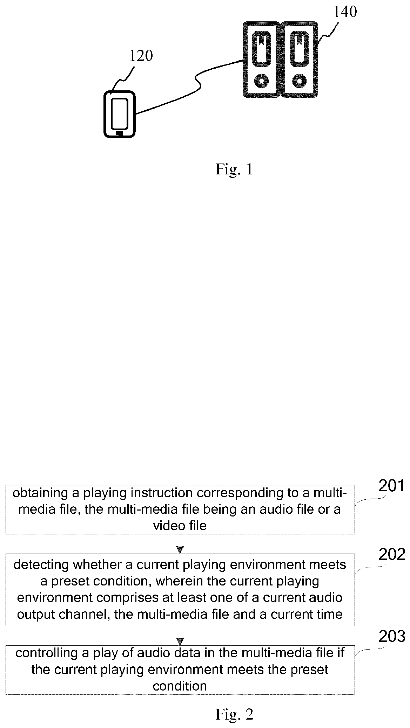

Fig. 1 is a schematic diagram illustrating an implementation environment according to an exemplary embodiment. The implementation environment may include a terminal 120 and at least one loudspeaker box device 140.

The terminal 120 may be an electronic device such as a mobile phone, a tablet computer, an e-book reader, a multi-media player, a desktop computer, a laptop, a smart television and the like. Usually, two audio output channels are disposed in the terminal 120. One audio output channel is a loudspeaker and the other audio output channel is an earphone.

The terminal 120 may be connected with the loudspeaker box device 140 via a wired or wireless connection. A wired connection may include but be not limited to a speaker wire, a wired network; and the wireless connection may include but not be limited to a wireless network, an infrared communication protocol, such as a Bluetooth, a Wi-Fi (Wireless Fidelity) and the like.

The loudspeaker box device 140 may be a wired loudspeaker box device or a wireless loudspeaker box device. For example, the common wireless loudspeaker box device may include a Bluetooth loudspeaker box, a Wi-Fi loudspeaker box, and an infrared loudspeaker box. In embodiments of the present disclosure, the terminal 120 may be connected with one or more loudspeaker box devices 140, and each loudspeaker box device 140 may be considered as one audio output channel.

Fig. 2 is a flow chart showing a control method for playing an audio according to an exemplary embodiment. The control method for playing the audio may be applied in the terminal 120 of the implementation environment shown in Fig. 1. The control method for playing the audio may include following steps.

In step 201, a playing instruction corresponding to a multi-media file is obtained, and the multi-media file may be an audio file or a video file.

In step 202, it is detected whether a current playing environment meets a preset condition, in which the current playing environment includes at least one of a current audio output channel, the multi-media file and a current time.

In step 203, play-back of audio data in the multi-media file is controlled if the current playing environment meets the preset condition.

The current playing environment may be represented by data, describing the audio channel, the file and the current time. Further, controlling play-back may include permitting play-back or restricting play-back as appropriate to the environment and the pre-set condition. Controlling play-back may also include inhibiting the current playback, such as by prompting the user in connection with the play-back, controlling the audio output volume to be lower than a pre-set value, or restricting play-back of particular files or on particular channels.

In conclusion, with the method provided by the embodiment, by detecting whether the current playing environment meets the preset condition when obtaining the playing instruction corresponding to the multi-media file, and controlling play-back of the audio data in the multi-media file if it is detected that the current playing environment meets the preset condition, the problem that the audio playing mode is too simple and it is easy to affect the surrounding personnel in the related art may be overcome, thus achieving the technical effect of further intellectualization of audio playing under a control of audio playing according to the real situation.

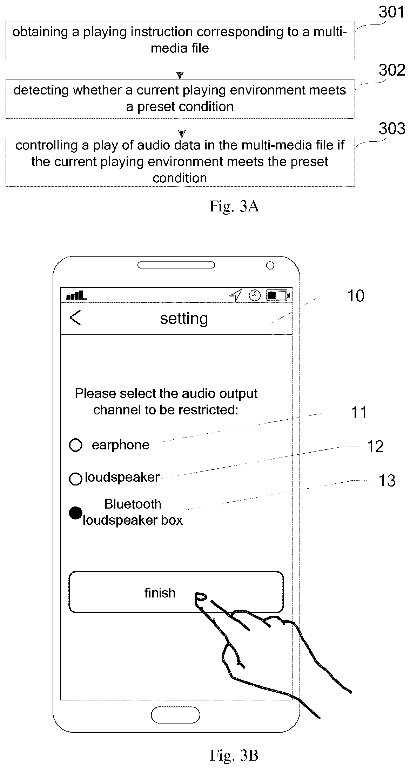

Fig. 3A is a flow chart showing a control method for playing an audio according to another exemplary embodiment. The control method for playing the audio may be applied in the terminal 120 of the implementation environment shown in Fig. 1. The control method for playing the audio may include following steps.

In step 301, a playing instruction corresponding to a multi-media file is obtained.

The terminal obtains the playing instruction corresponding to the multi-media file. The multi-media file may be an audio file or a video file. The playing instruction is triggered by the user and is used to indicate the terminal to play the multi-media file.

In step 302, it is detected whether a current playing environment meets a preset condition.

In this embodiment, the terminal does not play the multi-media file directly when obtaining the playing instruction corresponding to the multi-media file. The terminal firstly detects whether the current playing environment meets the preset condition. The current playing environment includes at least one of a current audio output channel, the multi-media file and a current time.

It has been described above that, the terminal may have one or more audio output channels. For example, the terminal's own audio output channels typically include the loudspeaker and the earphone, in addition, the terminal can be connected with one or more loudspeaker box devices and each loudspeaker box device may be considered as one audio output channel. The current audio output channel means a default audio output channel used by the terminal to play the audio data in a current case. For example, the current audio output channel may be the loudspeaker, the earphone or may be one or more loudspeaker box devices.

Several possible achievements in this step may be introduced and explained in the following.
1. The terminal detects whether the current audio output channel belongs to a preset audio output channel in a case that the current playing environment comprises the current audio output channel and determines that the current playing environment meets the preset condition if the current audio output channel belongs to the preset audio output channel.
   The preset audio output channel may be preset by the user, and also be set by the system. In practice, the audio output channel with the loud speaker function is set as the preset audio output channel. For example, the loud speaker built-in the terminal and the external loudspeaker box device of the terminal may be set as the preset audio output channel. Alternatively, the audio output channel with the power greater than the preset power or with the playing volume greater than the preset volume. For example, the external high-power Bluetooth loudspeaker box may be set as the preset audio output channel.
   In one possible embodiment, it is detected whether the current audio output channel belongs to the preset audio output channel by following steps of (1) obtaining an identifier corresponding to the current audio output channel; (2) detecting whether the identifier corresponding to the current audio output channel exists in a preset identifier set; and (3) determining that the current audio output channel belongs to the preset audio output channel if the identifier corresponding to the current audio output channel exists in the preset identifier set. The identifier for the current audio output channel may be part of the data defining the current playback environment as noted above.
   The identifiers corresponding to the audio output channels are used to distinguish and identify different audio output channels. For example, the identifier corresponding to the audio output channel may be an MAC (Media Access Control) address or a device name of the loudspeaker box device; or the identifier corresponding to the audio output channel may be a unique character string generated according to the preset rule, etc. The preset identifier set contains identifiers corresponding to various preset audio output channels. It is indicated that the current audio output channel belongs to the preset audio output channel if the identifier corresponding to the current audio output channel exists in the preset identifier set; on the contrary, It is indicated that the current audio output channel does not belong to the preset audio output channel if the identifier corresponding to the current audio output channel does not exist in the preset identifier set.
   In addition, the terminal may provide a corresponding channel setting interface in a case that the preset audio output channel is set by the user in advance, so that the user may set the preset audio output channel according to the channel setting interface. Alternatively, the terminal displays the channel setting interface, and the channel setting interface contains at least one audio output channel; and obtains a selecting instruction corresponding to a target audio output channel; and adds an identifier corresponding to the target audio output channel into the preset identifier set. In combination with reference to Fig. 3B, a schematic diagram of a channel setting interface 10 is illustrated as an example. The channel setting interface 10 contains three audio output channels, i.e., an earphone 11, a loudspeaker 12, and a Bluetooth loudspeaker box 13, respectively. The user may select one or more audio output channels to control according to his actual needs. For example, the user selects the Bluetooth loudspeaker box 13. Correspondingly, the terminal will add the identifier corresponding to the Bluetooth loudspeaker box 13 into the preset identifier set.
2. The terminal detects whether the multi-media file belongs to a target type of multimedia files in a case that the current playing environment comprises the multi-media file; and determines that the current playing environment meets the preset condition if the multi-media file belongs to the target type of multimedia files.
   The target type of multimedia files may be preset by the user, and also be set by the system in default. In practice, if the user wishes to control the play of relatively loud music, he may set the rock type of multimedia files as the target type of multimedia files; or if the user wishes to control the play of sensitive audios and videos, he may set the adult type of video files as the target type of multimedia files, etc.
   In addition, the terminal may detect whether the multi-media file belongs to the target type of multimedia files by using several possible ways as follows.
   In a first possible embodiment, the terminal obtains a file name of the multi-media file; detects whether the file name contains a first preset keyword; and determines that the multi-media file belongs to the target type of multimedia files if the file name contains the first preset keyword. The first preset keyword may be preset by the user, and also be set by the system in default. For example, in order to achieve the control of the play of the rock type of multimedia files, a rock artist's name, a rock song title, etc. may be set as the first preset keyword. Also for example, in order to achieve the control of the play of the adult type of video files, a name of an adult film star, an adult film title, etc. may be set as the first preset keyword. In addition, the terminal may detect whether the file name contains the first preset keyword by the related keyword matching algorithm.
   In a second possible embodiment, the terminal extracts at least one audio data sequence from the multi-media file; detects whether the at least one audio data sequence contains a second preset keyword by a speech recognition technology; and determines that the multi-media file belongs to the target type of multimedia files if the at least one audio data sequence contains the second preset keyword. The second preset keyword may be preset by the user, and also be set by the system in default. The terminal may convert the extracted audio data sequence into the text content by the speech recognition technology, and then detects whether the text content contains the second preset keyword by the related keyword matching algorithm.
   In a third possible embodiment, the terminal extracts at least one frame of image from the multi-media file; detects whether the at least one frame of image contains a target element; and determines that the multi-media file belongs to the target type of multimedia files if the at least one frame of image contains the target element. For example, in order to achieve the control of the play of the adult type of video files, the sensitive part may be set as the target element. In addition, the image recognition technologies used include but are not limited to the color-based image recognition technology, the brightness-based image recognition technology, the contrast-based image recognition technology, etc. The feature information such as the color feature, profile feature or texture feature and the like may be extracted from the component elements in the image, and then the extracted features may be compared with the features of the target element, and then it is determined whether the target element exists in the image according to the comparison result.
   Certainly, the above-mentioned three possible embodiments arc merely exemplary and explanatory and in other possible embodiments, the terminal may detects whether the multi-media file belongs to the target type of multi-media files according to other attribute information of the multi-media file, which will not be limited to embodiments of the present disclosure.
3. The terminal detects whether the current time belongs to a preset period of time in a case that the current playing environment includes the current time; and determines that the current playing environment meets the preset condition if the current time belongs to the preset period of time.

The preset period of time may be preset by the user, and also be set by the system in default. For example, in order to achieve the control of playing audios at late night and in early morning hours, the preset period of time may be set from 22:00 pm to 6:00 am in order to avoid affecting the normal resting of the surrounding persons. If the current time is 22:30, the terminal determines that the current playing environment meets the preset condition.

It should be noted that, the various preset conditions in this step may be set by the user, and also be set by the system in default. If it is set by the user, the user may set according to actual demands, thus meeting the needs of individual users to maximum and improving the user experience. If it is set by the system, the terminal may synchronize the preset conditions from the cloud server, thereby reducing the user's operating requirements.

In step 303, a play of audio data in the multi-media file is controlled if the current playing environment meets the preset condition.

The terminal controls the audio data in the multi-media file to be played, if the current playing environment meets the preset condition.

Alternatively, this step may include several of the following possible functions.

In a first possible embodiment, the terminal displays a prompt message for reminding the user to play the multi-media file cautiously if the current playing environment meets the preset condition.

In this embodiment, the prompt message is used to remind the user. The user views the above prompt message, and then the user may adjust the current playing environment accordingly.

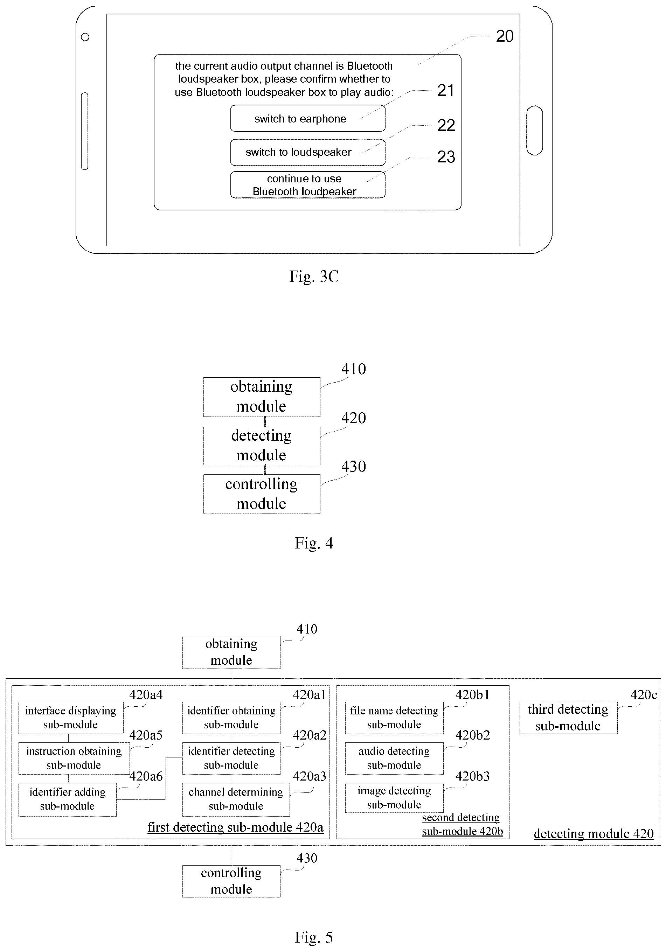

In one example, the terminal detects the current audio output channel belonging to the preset audio output channel, which may be taken as an example. In combination with reference to Fig. 3C, the terminal displays the prompt message 20 in a form of suspension window. The prompt message 20 contains three different option controls (21, 22 and 23 in Fig. 3C). The user may adjust the current audio output channel accordingly. For example, if the user clicks "Switch to earphone", the control 21 switches the current audio output channel from the Bluetooth loudspeaker box to the earphone. Then the terminal may play the audio data in the multi-media file via the earphone.

In a second possible embodiment, the terminal controls a playing volume of the audio data in the multi-media file smaller than a preset threshold.

The preset threshold may be preset by the user, and also be set by the system in default. By controlling the playing volume of audio data in the multi-media file smaller than the preset threshold, the playing volume will be automatically controlled within a relatively smaller range. On one hand, the normal play of multi-media files will not be affected and the user may listen to and/or watch the multi-media files; on the other hand, the surrounding people is avoided to hear the associated audio content as much as possible, thus avoiding affecting the surrounding personnel.

In addition, the terminal plays the audio data in the multi-media file normally via the current audio output channel if the current playing environment does not meet the preset condition.

In conclusion, with the method provided by the embodiment, by detecting whether the current playing environment meets the preset condition when obtaining the playing instruction corresponding to the multi-media file, and controlling a play of the audio data in the multi-media file if it is detected that the current playing environment meets the preset condition, the problem that the audio playing mode is too simple and it is easy to affect the surrounding personnel in the related art may be overcome, thus achieving technical effects of further intellectualization of audio playing under a control of audio playing according to the real situation.

Further, the method provided by the embodiment also offers a variety of audio playing control modes, including limiting the audio output channel, limiting the types of multi-media files and limiting the playing period of time. In practical applications, any above mode or a combination thereof may be used to achieve the intelligent control for audio playing.

The embodiments providing an apparatus of the present disclosure are as follows. The apparatus is used to implement the method according to the embodiments of the present disclosure. Concerning the details which are not described in the embodiments of the device, reference is made to the embodiments of the method.

Fig. 4 is a block diagram showing a control apparatus for playing an audio according to an exemplary embodiment. The control apparatus for playing the audio may be applied in the terminal 120 of the implementation environment shown in Fig. 1. The control apparatus for playing the audio may include an obtaining module 410, a detecting module 420 and a controlling module 430.

The obtaining module 410 is configured to obtain a playing instruction corresponding to a multi-media file, the multi-media file being an audio file or a video file.

The detecting module 420 is configured to detect whether a current playing environment meets a preset condition, in which the current playing environment includes at least one of a current audio output channel, the multi-media file and a current time.

The controlling module 430 is configured to control a play of audio data in the multi-media file if the current playing environment meets the preset condition.

In conclusion, with the apparatus provided by the embodiment, by detecting whether the current playing environment meets the preset condition when obtaining the playing instruction corresponding to the multi-media file, and controlling a play of the audio data in the multi-media file if it is detected that the current playing environment meets the preset condition, the problem that the audio playing mode is too simple and it is easy to affect the surrounding personnel in the related art may be overcome, thus achieving technical effects of further intellectualization of audio playing under a control of audio playing according to the real situation.

Fig. 5 is a block diagram showing a control apparatus for playing an audio according to another exemplary embodiment. The control apparatus for playing the audio may be applied in the terminal 120 of the implementation environment shown in Fig. 1. The control apparatus for playing the audio may include an obtaining module 410, a detecting module 420 and a controlling module 430.

The obtaining module 410 is configured to obtain a playing instruction corresponding to a multi-media file, the multi-media file being an audio file or a video file.

The detecting module 420 is configured to detect whether a current playing environment meets a preset condition, in which the current playing environment includes at least one of a current audio output channel, the multi-media file and a current time.

The controlling module 430 is configured to control a play of audio data in the multi-media file if the current playing environment meets the preset condition.

Alternatively, the detecting module 420 includes at least one of a first detecting sub-module 420a, a second detecting sub-module 420b and a third detecting sub-module 420c.

The first detecting sub-module 420a is configured to detect whether the current audio output channel belongs to a preset audio output channel in a case that the current playing environment comprises the current audio output channel, and to determine that the current playing environment meets the preset condition if the current audio output channel belongs to the preset audio output channel.

The second detecting sub-module 420b is configured to detect whether the multi-media file belongs to a target type of multimedia files in a case that the current playing environment comprises the multi-media file, and to determine that the current playing environment meets the preset condition if the multi-media file belongs to the target type of multimedia files.

The third detecting sub-module 420c is configured to detect whether the current time belongs to a preset period of time in a case that the current playing environment comprises the current time, and to determine that the current playing environment meets the preset condition if the current time belongs to the preset period of time.

Alternatively, the first detecting sub-module 420a includes an identifier obtaining sub-module 420a1, an identifier detecting sub-module 420a2 and a channel determining sub-module 420a3.

The identifier obtaining sub-module 420a1 is configured to obtain an identifier corresponding to the current audio output channel.

The identifier detecting sub-module 420a2 is configured to whether detect the identifier corresponding to the current audio output channel exists in a preset identifier set.

The channel determining sub-module 420a3 is configured to determine that the current audio output channel belongs to the preset audio output channel if the identifier corresponding to the current audio output channel exists in the preset identifier set.

Alternatively, the first detecting sub-module 420a further includes an interface displaying sub-module 420a4, an instruction obtaining sub-module 420a5 and an identifier adding sub-module 420a6.

The interface displaying sub-module 420a4 is configured to display a channel setting interface, the channel setting interface comprising at least one audio output channel.

The instruction obtaining sub-module 420a5 is configured to obtain a selecting instruction corresponding to a target audio output channel.

The identifier adding sub-module 420a6 is configured to add an identifier corresponding to the target audio output channel into the preset identifier set.

Alternatively, the second detecting sub-module 420b includes at least one of a file name detecting sub-module 420b1, an audio detecting sub-module 420b2 and an image detecting sub-module 420b3.

The file name detecting sub-module 420b1 is configured to obtain a file name of the multi-media file, to detect whether the file name comprises a first preset keyword, and to determine that the multi-media file belongs to the target type of multimedia files if the file name comprises the first preset keyword.

The audio detecting sub-module 420b2 is configured to extract at least one audio data sequence from the multi-media file, to detect whether the at least one audio data sequence comprises a second preset keyword by a speech recognition technology, and to determine that the multi-media file belongs to the target type of multimedia files if the at least one audio data sequence comprises the second preset keyword.

The image detecting sub-module 420b3 is configured to extract at least one frame of image from the multi-media file, to detect whether the at least one frame of image comprises a target element, and to determine that the multi-media file belongs to the target type of multimedia files if the at least one frame of image comprises the target element.

Alternatively, the controlling module 430 is configured to display a prompt message for reminding a user to play the multi-media file cautiously.

Or the controlling module 430 is configured to control a playing volume of the audio data in the multi-media file smaller than a preset threshold.

In conclusion, with the apparatus provided by the embodiment, by detecting whether the current playing environment meets the preset condition when obtaining the playing instruction corresponding to the multi-media file, and controlling a play of the audio data in the multi-media file if it is detected that the current playing environment meets the preset condition, the problem that the audio playing mode is too simple and it is easy to affect the surrounding personnel in the related art may be overcome, thus achieving technical effects of further intellectualization of audio playing under a control of audio playing according to the real situation.

It should be noted that, the control apparatus for playing the audio provided by the embodiments described above only may be illustrated by the division of each of these functional modules. In practical applications, the above-mentioned functions may be realized by different function modules according to practical needs, i.e. the content structure of the device may be divided into different functional modules to realize all or part of the functions described above.

With respect to the devices in the above embodiments, the specific manners for performing operations for individual modules therein have been described in detail in the embodiments regarding the methods, which are not elaborated herein again.

A control device for playing an audio may be provided in embodiments of the present disclosure and can realize the control method for playing the audio provided in embodiments of the present disclosure. The device includes: a processor, a memory configured to store an instruction executable by the processor.

The processor is configured to: obtain a playing instruction corresponding to a multi-media file, the multi-media file being an audio file or a video file; detect whether a current playing environment meets a preset condition, in which the current playing environment includes at least one of a current audio output channel, the multi-media file and a current time; and control a play of audio data in the multi-media file if the current playing environment meets the preset condition.

Alternatively, the processor is configured to: detect whether the current audio output channel belongs to a preset audio output channel in a case that the current playing environment contains the current audio output channel, and determine that the current playing environment meets the preset condition if the current audio output channel belongs to the preset audio output channel; or detect whether the multi-media file belongs to a target type of multimedia files in a case that the current playing environment contains the multi-media file, and determine that the current playing environment meets the preset condition if the multi-media file belongs to the target type of multimedia files; or detect whether the current time belongs to a preset period of time in a case that the current playing environment contains the current time, and determine that the current playing environment meets the preset condition if the current time belongs to the preset period of time.

Alternatively, the processor is configured to: obtain an identifier corresponding to the current audio output channel; detect whether the identifier corresponding to the current audio output channel exists in a preset identifier set; and determine that the current audio output channel belongs to the preset audio output channel if the identifier corresponding to the current audio output channel exists in the preset identifier set.

Alternatively, the processor is further configured to: display a channel setting interface, the channel setting interface including at least one audio output channel; obtain a selecting instruction corresponding to a preset audio output channel; and add an identifier corresponding to the target audio output channel into the preset identifier set.

Alternatively, the processor is further configured to: obtain a file name of the multi-media file, detect whether the file name contains a first preset keyword, and determine that the multi-media file belongs to the target type of multimedia files if the file name contains the first preset keyword; or extract at least one audio data sequence from the multi-media file, detect whether the at least one audio data sequence contains a second preset keyword by a speech recognition technology, and determine that the multi-media file belongs to the target type of multimedia files if the at least one audio data sequence contains the second preset keyword; or extract at least one frame of image from the multi-media file, detect whether the at least one frame of image contains a target element, and determine that the multi-media file belongs to the target type of multimedia files if the at least one frame of image comprises the target element.

Alternatively, the processor is further configured to: display a prompt message for reminding a user to play the multi-media file cautiously; or control a playing volume of the audio data in the multi-media file smaller than a preset threshold.

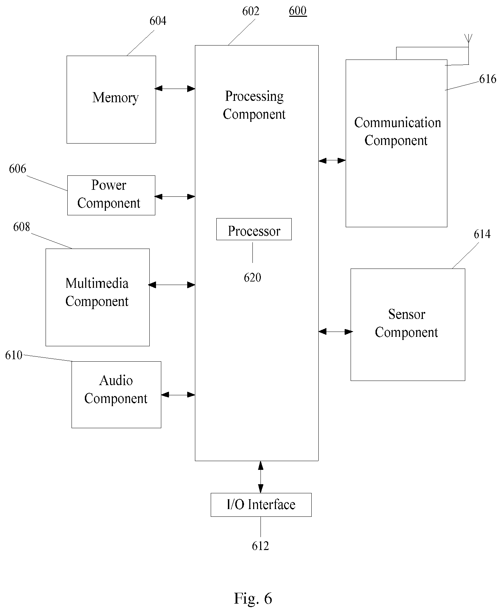

Fig. 6 is a block diagram showing a control device 600 for playing an audio according to an exemplary embodiment. For example, the device 600 may be a mobile phone, a computer, a digital broadcast terminal, a messaging device, a gaming console, a tablet, a medical device, exercise equipment, a personal digital assistant, and the like.

Referring to Fig. 6, the device 600 may include one or more of the following components: a processing component 602, a memory 604, a power component 606, a multimedia component 608, an audio component 610, an input/output (I/O) interface 612, a sensor component 614 and a communication component 616.

The processing component 602 typically controls overall operations of the device 600, such as the operations associated with display, telephone calls, data communications, camera operations, and recording operations. The processing component 602 may include one or more processors 620 to execute instructions so as to perform all or a part of the steps in the above described methods. Moreover, the processing component 602 may include one or more modules which facilitate the interaction between the processing component 602 and other components. For instance, the processing component 602 may include a multimedia module to facilitate the interaction between the multimedia component 608 and the processing component 602.

The memory 604 is configured to store various types of data to support the operation of the device 600. Examples of such data include instructions for any applications or methods operated on the device 600, contact data, phonebook data, messages, pictures, videos, etc. The memory 604 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 606 is configured to provide power to various components of the device 600. The power component 606 may include a power management system, one or more power sources, and other components associated with the generation, control, and distribution of power in the device 600.

The multimedia component 608 includes a screen configured to provide an output interface between the device 600 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 608 includes a front camera and/or a rear camera. The front camera and the rear camera may receive an external multimedia datum when the device 600 is in an operation mode such as a photographing mode or a video mode. Each of the front camera and the rear camera may be a fixed optical lens system or have focus and optical zoom capability.

The audio component 610 is configured to output and/or input audio signals. For example, the audio component 610 includes a microphone ("MIC") configured to receive an external audio signal when the device 600 is in an operation mode, such as a call mode, a recording mode, and a voice recognition mode. The received audio signal may be further stored in the memory 604 or transmitted via the communication component 616. In some embodiments, the audio component 610 further includes a loud speaker to output audio signals.

The I/O interface 612 is configured to provide an interface between the processing component 602 and peripheral interface modules, such as a keyboard, a click wheel, buttons, and the like. The buttons may include, but are not limited to, a home button, a volume button, a starting button, and a locking button.

The sensor component 614 includes one or more sensors to provide status assessments of various aspects of the device 600. For instance, the sensor component 614 may detect an on/off status of the device 600, relative positioning of components (e.g., a display screen and a keypad) of the device 600. The sensor component 614 may further detect a change in position of the device 600 or a component of the device 600, a presence or absence of user contact with the device 600, an orientation or an acceleration/deceleration of the device 600, and a change in temperature of the device 600. The sensor component 614 may include a proximity sensor configured to detect the presence of nearby objects without any physical contact. The sensor component 614 may further include a light sensor, such as a CMOS or CCD image sensor, for use in imaging applications. In some embodiments, the sensor component 614 may also include an accelerometer sensor, a gyroscope sensor, a magnetic sensor, a pressure sensor, or a temperature sensor.

The communication component 616 is configured to facilitate a wired or wireless communication between the device 600 and other terminals. The device 600 can access a wireless network based on a communication standard, such as WiFi, 2G, or 3G, or a combination thereof. In one exemplary embodiment, the communication component 616 receives a broadcast signal or broadcast associated information from an external broadcast control system via a broadcast channel. In one exemplary embodiment, the communication component 616 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, or other technologies.

In exemplary embodiments, the device 600 may be implemented with one or more electronic elements such as application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there is further provided a non-transitory computer readable storage medium including instructions, such as the memory 604 including instructions executable by the processor 620 in the device 600 to perform the above-described methods. For example, the non-transitory computer-readable storage medium may be a ROM, a RAM, a CD-ROM, a magnetic tape, a floppy disc, an optical data storage device, and the like.

A non-transitory computer readable storage medium includes instructions executable by the processor of the device 600 to make the device 600 perform the above-described control methods for playing the audio.

Other embodiments of the present disclosure will be apparent to those skilled in the art from consideration of the specification and practice of the present disclosure disclosed here.

Where functional modules are referred to in apparatus embodiments for carrying out various steps of the described method(s) it will be understood that these modules may be implemented in hardware, in software, or a combination of the two. When implemented in hardware, the modules may be implemented as one or more hardware modules, such as one or more application specific integrated circuits. When implemented in software, the modules may be implemented as one or more computer programs that are executed on one or more processors.

## Claims

1. A control method for restricting audio play-back, comprising:
obtaining a playing instruction corresponding to a multi-media file containing audio data, the multi-media file being a video file (201; 301);
detecting whether a current playing environment meets a preset condition, wherein the current playing environment comprises a current time of day and the content of the multi-media file and optionally a current audio output channel (202; 302);
wherein detecting whether a current playing environment meets a preset condition (202; 302) comprises:
detecting whether the content of the multi-media file belongs to a target type of content of multimedia files, comprising:
extracting at least one video frame from the multi-media file;
detecting whether the at least one video frame comprises a target element; and
determining that the content of the multi-media file belongs to the target type of content of multimedia files if the at least one video frame comprises the target element; and
determining that the current playing environment meets the preset condition if the content of multi-media file belongs to the target type of content of multimedia files;
the method further comprising:
restricting playing of the audio data in the multi-media file if the current playing environment meets the preset condition (203; 303), by displaying a prompt message for reminding a user to play the multi-media file cautiously.

2. The method according to claim 1, wherein detecting whether a current playing environment meets a preset condition (202; 302) further comprises:
detecting whether the current time of day belongs to a preset period of time and determining that the current playing environment meets the preset condition if the current time of day belongs to the preset period of time; and
upon the current playing environment comprising a current audio output channel:
detecting whether the current audio output channel belongs to a preset audio output channel; and determining that the current playing environment meets the preset condition if the current audio output channel belongs to the preset audio output channel.

3. The method according to claim 2, wherein detecting whether the current audio output channel belongs to a preset audio output channel comprises:
obtaining an identifier corresponding to the current audio output channel;
detecting whether the identifier corresponding to the current audio output channel exists in a preset identifier set; and
determining that the current audio output channel belongs to the preset audio output channel if the identifier corresponding to the current audio output channel exists in the preset identifier set.

4. The method according to claim 3, further comprising:
displaying a channel setting interface, the channel setting interface comprising at least one audio output channel;
obtaining a selecting instruction corresponding to a target audio output channel; and
adding an identifier corresponding to the target audio output channel into the preset identifier set.

5. The method according to any one of claims 2 to 4, wherein detecting whether the content of multi-media file belongs to a target type of content of multimedia files further comprises:
obtaining a file name of the multi-media file; detecting whether the file name comprises a first preset keyword; and determining that the content of the multi-media file belongs to the target type of content of multimedia files if the file name comprises the first preset keyword;
or
extracting at least one audio data sequence from the multi-media file; detecting whether the at least one audio data sequence comprises a second preset keyword by a speech recognition technology; and determining that the content of the multi-media file belongs to the target type of content of multimedia files if the at least one audio data sequence comprises the second preset keyword.

6. A control apparatus for restricting audio, comprising:
an obtaining module (410), configured to obtain a playing instruction corresponding to a multi-media file, the multi-media file being a video file;
a detecting module (420), configured to detect whether a current playing environment meets a preset condition, wherein the current playing environment comprises a current time of day and the content of the multi-media file and optionally a current audio output channel;
wherein the detecting module (420) comprises a second detecting sub-module (420b), configured to detect whether the content of multi-media file belongs to a target type of multimedia files, and to determine that the current playing environment meets the preset condition if the multi-media file belongs to the target type of multimedia files, and
the second detecting sub-module (420b) comprises a video image detecting sub-module (420b3), configured to extract at least one video frame from the multi-media file, to detect whether the at least one video frame comprises a target element, and to determine that the content of multi-media file belongs to the target type of content of multimedia files if the at least one video frame comprises the target element;
the control apparatus further comprising:
a controlling module (430), configured to restrict a play of audio data in the multi-media file if the current playing environment meets the preset condition by displaying a prompt message for reminding a user to play the multi-media file cautiously.

7. The apparatus according to claim 6, wherein the detecting module (420) further comprises a third detecting sub-module (420c) configured to detect whether the current time of day belongs to a preset period of time and to determine that the current playing environment meets the preset condition if the current time of day belongs to the preset period of time and optionally a first detecting sub-module (420a) configured to detect whether the current audio output channel belongs to a preset audio output channel in a case that the current playing environment comprises the current audio output channel, and to determine that the current playing environment meets the preset condition if the current audio output channel belongs to the preset audio output channel.

8. The apparatus according to claim 7, wherein the first detecting sub-module (420a) comprises an identifier obtaining sub-module (420a1), an identifier detecting sub-module (420a2) and a channel determining sub-module (420a3);
the identifier obtaining sub-module (420a1) is configured to obtain an identifier corresponding to the current audio output channel;
the identifier detecting sub-module (420a2) is configured to detect whether the identifier corresponding to the current audio output channel exists in a preset identifier set;
the channel determining sub-module (420a3) is configured to determine that the current audio output channel belongs to the preset audio output channel if the identifier corresponding to the current audio output channel exists in the preset identifier set.

9. The apparatus according to claim 8, wherein the first detecting sub-module (420a) further comprises an interface displaying sub-module (420a4), an instruction obtaining sub-module (420a5) and an identifier adding sub-module (420a6);
the interface displaying sub-module (420a4) is configured to display a channel setting interface, the channel setting interface comprising at least one audio output channel;
the instruction obtaining sub-module (420a5) is configured to obtain a selecting instruction corresponding to a target audio output channel;
the identifier adding sub-module (420a6) is configured to add an identifier corresponding to the target audio output channel into the preset identifier set.

10. The apparatus according to any one of claims 8 to 10, wherein the second detecting sub-module (420b) further comprises at least one of a file name detecting sub-module (420b 1) and an audio detecting sub-module (420b2);
the file name detecting sub-module (420b1) is configured to obtain a file name of the multi-media file, to detect whether the file name comprises a first preset keyword, and to determine that the content of the multi-media file belongs to the target type of content of multimedia files if the file name comprises the first preset keyword;
the audio detecting sub-module (420b2) is configured to extract at least one audio data sequence from the multi-media file, to detect whether the at least one audio data sequence comprises a second preset keyword by a speech recognition technology, and to determine that the content of the multi-media file belongs to the target type of content of multimedia files if the at least one audio data sequence comprises the second preset keyword.

11. A program product having stored therein instructions that, when executed by a processor of a device, causes the device to perform the control method for playing audio according to any one of claims 1 to 5.

12. A computer program, which when executing on a processor, performs the method for playing audio according to any one of claims 1 to 5.

## Patentansprüche

1. Steuerverfahren zum Beschränken von automatischem Abspielen, das Folgendes beinhaltet:
Beschaffen einer Abspielanweisung, die einer Audiodaten enthaltenden Multimedia-Datei entspricht, wobei die Multimedia-Datei eine Videodatei (201, 301) ist;
Erkennen, ob eine aktuelle Abspielumgebung eine vorgegebene Bedingung erfüllt, wobei die aktuelle Abspielumgebung eine aktuelle Uhrzeit und den Inhalt der Multimedien-Datei und wahlweise einen aktuellen Audioausgabekanal (202; 302) beinhaltet;
wobei das Erkennen, ob eine aktuelle Abspielumgebung eine vorgegebene Bedingung (202; 302) erfüllt, Folgendes beinhaltet:
Erkennen, ob der Inhalt der Multimedia-Datei zu einem Zieltyp von Multimedia-Dateien-Inhalt gehört, das Folgendes beinhaltet:
Extrahieren von wenigstens einem Videoeinzelbild aus der Multimedia-Datei;
Erkennen, ob das wenigstens eine Videoeinzelbild ein Zielelement beinhaltet; und
Bestimmen, dass der Inhalt der Multimedia-Datei zu dem Zieltyp von Multimedia-Dateien-Inhalt gehört, wenn das wenigstens eine Videoeinzelbild das Zielelement beinhaltet; und
Bestimmen, dass die aktuelle Abspielumgebung die vorgegebene Bedingung erfüllt, wenn der Inhalt der Multimedia-Datei zu dem Zieltyp von Multimedia-Dateien-Inhalt gehört;
wobei das Verfahren ferner Folgendes beinhaltet:
Beschränken des Abspielens der Audiodaten in der Multimedia-Datei, wenn die aktuelle Abspielumgebung die vorgegebene Bedingung (203; 303) erfüllt, durch Anzeigen einer Aufforderungsnachricht zum Erinnern eines Benutzers, die Multimedia-Datei vorsichtig abzuspielen.

2. Verfahren nach Anspruch 1, wobei das Erkennen, ob eine aktuelle Abspielumgebung eine vorgegebene Bedingung (202; 302) erfüllt, ferner Folgendes beinhaltet:
Erkennen, ob die aktuelle Uhrzeit zu einer vorgegebenen Zeitspanne gehört, und Bestimmen, dass die aktuelle Abspielumgebung die vorgegebene Bedingung erfüllt, wenn die aktuelle Uhrzeit zur vorgegebenen Zeitspanne gehört; und
dabei, dass die aktuelle Abspielumgebung einen aktuellen Audioausgabekanal beinhaltet:
Erkennen, ob der aktuelle Audioausgabekanal zu einem vorgegebenen Audioausgabekanal gehört; und Bestimmen, dass die aktuelle Abspielumgebung die vorgegebene Bedingung erfüllt, wenn der aktuelle Audioausgabekanal zu dem vorgegebenen Audioausgabekanal gehört.

3. Verfahren nach Anspruch 2, wobei das Erkennen, ob der aktuelle Audioausgabekanal zu einem vorgegebenen Audioausgabekanal gehört, Folgendes beinhaltet:
Beschaffen einer Kennung, die dem aktuellen Audioausgabekanal entspricht;
Erkennen, ob die Kennung, die dem aktuellen Audioausgabekanal entspricht, in einem vorgegebenen Kennungssatz besteht; und
Bestimmen, dass der aktuelle Audioausgabekanal zu dem vorgegebenen Audioausgabekanal gehört, wenn die Kennung, die dem aktuellen Audioausgabekanal entspricht, in dem vorgegebenen Kennungssatz besteht.

4. Verfahren nach Anspruch 3, das ferner Folgendes aufweist:
Anzeigen einer Kanaleinstellungsschnittstelle, wobei die Kanaleinstellungsschnittstelle wenigstens einen Audioausgabekanal beinhaltet;
Beschaffen einer Auswählanweisung, die einem Zielaudioausgabekanal entspricht; und
Einfügen einer Kennung, die dem Zielaudioausgabekanal entspricht, in den vorgegebenen Kennungssatz.

5. Verfahren nach einem der Ansprüche 2 bis 4, wobei das Erkennen, ob der Inhalt der Multimedia-Datei zu einem Zieltyp von Multimedia-Dateien-Inhalt gehört, ferner Folgendes beinhaltet:
Beschaffen eines Dateinamens der Multimedia-Datei; Erkennen, ob der Dateiname ein erstes vorgegebenes Schlüsselwort beinhaltet; und Bestimmen, dass der Inhalt der Multimedia-Datei zu dem Zieltyp von Multimedia-Dateien-Inhalt gehört, wenn der Dateiname das erste vorgegebene Schlüsselwort beinhaltet;
oder
Extrahieren von wenigstens einer Audiodatenfolge aus der Multimedia-Datei; durch eine Spracherkennungstechnik Erkennen, ob die wenigstens eine Audiodatenfolge ein zweites vorgegebenes Schlüsselwort beinhaltet; und Bestimmen, dass der Inhalt der Multimedia-Datei zu dem Zieltyp von Multimedia-Dateien-Inhalt gehört, wenn die wenigstens eine Audiodatenfolge das zweite vorgegebene Schlüsselwort beinhaltet.

6. Steuervorrichtung zum Beschränken von Audio, die Folgendes beinhaltet:
ein Beschaffungsmodul (410), das zum Beschaffen einer Abspielanweisung konfiguriert ist, die einer Multimedia-Datei entspricht, wobei die Multimedia-Datei eine Videodatei ist;
ein Erkennungsmodul (420), das zum Erkennen, ob eine aktuelle Abspielumgebung eine vorgegebene Bedingung erfüllt, konfiguriert ist, wobei die aktuelle Abspielumgebung eine aktuelle Uhrzeit und den Inhalt der Multimedien-Datei und wahlweise einen aktuellen Audioausgabekanal beinhaltet;
wobei das Erkennungsmodul (420) ein zweites Erkennungsuntermodul (420b) beinhaltet, das konfiguriert ist zum Erkennen, ob der Multimedia-Datei-Inhalt zu einem Zieltyp von Multimedia-Dateien gehört, und zum Bestimmen, dass die aktuelle Abspielumgebung die vorgegebene Bedingung erfüllt, wenn die Multimedia-Datei zu dem Zieltyp von Multimedia-Dateien gehört, und
das zweite Erkennungsuntermodul (420b) ein Videobild-Erkennungsuntermodul (420b3) beinhaltet, das konfiguriert ist zum Extrahieren von wenigstens einem Videoeinzelbild aus der Multimedia-Datei, um zu erkennen, ob das wenigstens eine Videoeinzelbild ein Zielelement beinhaltet, und zum Bestimmen, dass der Multimedia-Datei-Inhalt zu dem Zieltyp von Multimedia-Dateien-Inhalt gehört, wenn das wenigstens eine Videoeinzelbild das Zielelement beinhaltet;
wobei die Steuervorrichtung ferner Folgendes beinhaltet:
ein Steuermodul (430), das konfiguriert ist zum Beschränken eines Abspielens von Audiodaten in der Multimedia-Datei, wenn die aktuelle Abspielumgebung die vorgegebene Bedingung erfüllt, durch Anzeigen einer Aufforderungsnachricht zum Erinnern eines Benutzers, die Multimedia-Datei vorsichtig abzuspielen.

7. Vorrichtung nach Anspruch 6, wobei das Erkennungsmodul (420) ferner Folgendes beinhaltet: ein drittes Erkennungsuntermodul (420c), das konfiguriert ist zum Erkennen, ob die aktuelle Uhrzeit zu einer vorgegebenen Zeitspanne gehört, und zum Bestimmen, dass die aktuelle Abspielumgebung die vorgegebene Bedingung erfüllt, wenn die aktuelle Uhrzeit zur vorgegebenen Zeitspanne gehört, und wahlweise ein erstes Erkennungsuntermodul (420a), das konfiguriert ist zum Erkennen, ob der aktuelle Audioausgabekanal zu einem vorgegebenen Audioausgabekanal gehört, falls die aktuelle Abspielumgebung den aktuellen Audioausgabekanal beinhaltet, und zum Bestimmen, dass die aktuelle Abspielumgebung die vorgegebene Bedingung erfüllt, wenn der aktuelle Audioausgabekanal zu dem vorgegebenen Audioausgabekanal gehört.

8. Vorrichtung nach Anspruch 7, wobei das erste Erkennungsuntermodul (420a) ein Kennungsbeschaffungsuntermodul (420a1), ein Kennungserkennungsuntermodul (420a2) und ein Kanalbestimmungsuntermodul (420a3) beinhaltet;
das Kennungsbeschaffungsuntermodul (420a1) konfiguriert ist zum Beschaffen einer Kennung, die dem aktuellen Audioausgabekanal entspricht;
das Kennungserkennungsuntermodul (420a2) konfiguriert ist zum Erkennen, ob die Kennung, die dem aktuellen Audioausgabekanal entspricht, in einem vorgegebenen Kennungssatz besteht;
das Kanalbestimmungsuntermodul (420a3) konfiguriert ist zum Bestimmen, dass der aktuelle Audioausgabekanal zu dem vorgegebenen Audioausgabekanal gehört, wenn die Kennung, die dem aktuellen Audioausgabekanal entspricht, in dem vorgegebenen Kennungssatz besteht.

9. Vorrichtung nach Anspruch 8, wobei das erste Erkennungsuntermodul (420a) ferner ein Schnittstellenanzeigeuntermodul (420a4), ein Anweisungsbeschaffungsuntermodul (420a5) und ein Kennungseinfügungsuntermodul (420a6) beinhaltet;
das Schnittstellenanzeigeuntermodul (420a4) konfiguriert ist zum Anzeigen einer Kanaleinstellungsschnittstelle, wobei die Kanaleinstellungsschnittstelle wenigstens einen Audioausgabekanal beinhaltet;
das Anweisungsbeschaffungsuntermodul (420a5) konfiguriert ist zum Beschaffen einer Auswählanweisung, die einem Zielaudioausgabekanal entspricht;
das Kennungseinfügungsuntermodul (420a6) konfiguriert ist zum Einfügen einer Kennung, die dem Zielaudioausgabekanal entspricht, in den vorgegebenen Kennungssatz.

10. Vorrichtung nach einem der Ansprüche 8 bis 10, wobei das zweite Erkennungsuntermodul (420b) ferner wenigstens eines von einem Dateinamenserkennungsuntermodul (420b1) und einem Audioerkennungsuntermodul (420b2) beinhaltet;
das Dateinamenserkennungsuntermodul (420b1) konfiguriert ist zum Beschaffen eines Dateinamens der Multimedia-Datei, zum Erkennen, ob der Dateiname ein erstes vorgegebenes Schlüsselwort beinhaltet, und zum Bestimmen, dass der Inhalt der Multimedia-Datei zu dem Zieltyp von Multimedia-Dateien-Inhalt gehört, wenn der Dateiname das erste vorgegebene Schlüsselwort beinhaltet;
das Audioerkennungsuntermodul (420b2) konfiguriert ist zum Extrahieren von wenigstens einer Audiodatenfolge aus der Multimedia-Datei, zum Erkennen durch eine Spracherkennungstechnik, ob die wenigstens eine Audiodatenfolge ein zweites vorgegebenes Schlüsselwort beinhaltet, und zum Bestimmen, dass der Inhalt der Multimedia-Datei zu dem Zieltyp von Multimedia-Dateien-Inhalt gehört, wenn die wenigstens eine Audiodatenfolge das zweite vorgegebene Schlüsselwort beinhaltet.

11. Programmprodukt, in dem Anweisungen gespeichert sind, das bei Ausführung durch einen Prozessor einer Vorrichtung die Vorrichtung zum Durchführen des Steuerverfahrens zum Audio-Abspielen nach einem der Ansprüche 1 bis 5 veranlasst.

12. Computerprogramm, das bei Ausführung in einem Prozessor das Verfahren zum Audio-Abspielen nach einem der Ansprüche 1 bis 5 durchführt.

## Revendications

1. Procédé de commande destiné à restreindre une lecture audio, comprenant :
obtenir une instruction de lecture correspondant à un fichier multimédia contenant des données audio, le fichier multimédia étant un fichier vidéo (201, 301) ;
détecter si un environnement de lecture courant répond à une condition préréglée, où l'environnement de lecture courant comprend une heure du jour courante et le contenu du fichier multimédia et optionnellement un canal de sortie audio courant (202 ; 302) ;
où détecter si un environnement de lecture courant répond à une condition préréglée (202, 302) comprend :
détecter si le contenu du fichier multimédia appartient à un type cible de contenu de fichiers multimédia, comprenant :
extraire au moins une trame vidéo du fichier multimédia ;
détecter si la au moins une trame vidéo comprend un élément cible ; et
déterminer que le contenu du fichier multimédia appartient au type cible de contenu de fichiers multimédia si la au moins une trame vidéo comprend l'élément cible ; et
déterminer que l'environnement de lecture courant répond à la condition préréglée si le contenu du fichier multimédia appartient au type cible de contenu de fichiers multimédia ;
le procédé comprenant en outre :
restreindre la lecture des données audio dans le fichier multimédia si l'environnement de lecture courant répond à la condition préréglée (203, 303), en affichant un message d'invite pour rappeler à un utilisateur de lire le fichier multimédia avec précaution.

2. Procédé selon la revendication 1, dans lequel détecter si un environnement de lecture courant répond à une condition préréglée (202, 302) comprend en outre :
détecter si l'heure du jour courante appartient à une période de temps préréglée et déterminer que l'environnement de lecture courant répond à la condition préréglée si l'heure du jour courante appartient à la période de temps préréglée ; et
sur le fait que l'environnement de lecture courant comprend un canal de sortie audio courant :
détecter si le canal de sortie audio courant appartient à un canal de sortie audio préréglé ; et déterminer que l'environnement de lecture courant répond à la condition préréglée si le canal de sortie audio courant appartient au canal de sortie audio préréglé.

3. Procédé selon la revendication 2, dans lequel détecter si le canal de sortie audio courant appartient à un canal de sortie audio préréglé comprend :
obtenir un identificateur correspondant au canal de sortie audio courant ;
détecter si l'identificateur correspondant au canal de sortie audio courant existe dans un ensemble d'identificateurs préréglé ; et
déterminer que le canal de sortie audio courant appartient au canal de sortie audio préréglé si l'identificateur correspondant au canal de sortie audio courant existe dans l'ensemble d'identificateurs préréglé.

4. Procédé selon la revendication 3, comprenant en outre :
afficher une interface de réglage de canaux, l'interface de réglage de canaux comprenant au moins un canal de sortie audio ;
obtenir une instruction de sélection correspondant à un canal de sortie audio cible ; et
ajouter un identificateur correspondant au canal de sortie audio cible dans l'ensemble d'identificateurs préréglé.

5. Procédé selon l'une quelconque des revendications 2 à 4, dans lequel détecter si le contenu du fichier multimédia appartient à un type cible de contenu de fichiers multimédia comprend en outre :
obtenir un nom de fichier du fichier multimédia ; détecter si le nom de fichier comprend un premier mot clé préréglé ; et déterminer que le contenu du fichier multimédia appartient au type cible de contenu de fichiers multimédia si le nom de fichier comprend le premier mot clé préréglé ; ou bien
extraire au moins une séquence de données audio du fichier multimédia, détecter que la au moins une séquence de données audio comprend un deuxième mot clé préréglé par une technologie de reconnaissance vocale ; et déterminer que le contenu du fichier multimédia appartient au type cible de contenu de fichiers multimédia si la au moins une séquence de données audio comprend le deuxième mot clé préréglé.

6. Appareil de commande destiné à restreindre l'audio, comprenant :
un module d'obtention (410), configuré pour obtenir une instruction de lecture correspondant à un fichier multimédia, le fichier multimédia étant un fichier vidéo ;
un module de détection (420), configuré pour détecter si un environnement de lecture courant répond à une condition préréglée, où l'environnement de lecture courant comprend une heure du jour courante et le contenu du fichier multimédia et optionnellement un canal de sortie audio courant ;
dans lequel le module de détection (420) comprend un deuxième sous-module de détection (420b) configuré pour détecter si le contenu du fichier multimédia appartient à un type cible de fichiers multimédia, et déterminer que l'environnement de lecture courant répond à la condition préréglée si le fichier multimédia appartient au type cible de fichiers multimédia, et
le deuxième sous-module de détection (420b) comprend un sous-module de détection d'image vidéo (420b3), configuré pour extraire au moins une trame vidéo du fichier multimédia, pour détecter si la au moins une trame vidéo comprend un élément cible, et pour déterminer que le contenu du fichier multimédia appartient au type cible de contenu de fichiers multimédia si la au moins une trame vidéo comprend l'élément cible ; l'appareil de commande comprenant en outre :
un module de commande (430), configuré pour restreindre une lecture de données audio dans le fichier multimédia si l'environnement de lecture courant répond à la condition préréglée en affichant un message d'invite pour rappeler à un utilisateur de lire le fichier multimédia avec précaution.

7. Appareil selon la revendication 6, dans lequel le module de détection (420) comprend en outre un troisième sous-module de détection (420c) configuré pour détecter si l'heure du jour courante appartient à une période de temps préréglée et pour déterminer que l'environnement de lecture courant répond à la condition préréglée si l'heure du jour courante appartient à la période de temps préréglée et optionnellement un premier sous-module de détection (420a) configuré pour détecter si le canal de sortie audio courant appartient à un canal de sortie audio préréglé dans un cas dans lequel l'environnement de lecture courant comprend le canal de sortie audio courant, et pour déterminer que l'environnement de lecture courant répond à la condition préréglée si le canal de sortie audio courant appartient au canal de sortie audio préréglé.

8. Appareil selon la revendication 7, dans lequel le premier sous-module de détection (420a) comprend un sous-module d'obtention d'identificateur (420a1), un sous-module de détection d'identificateur (420a2) et un sous-module de détermination de canal (420a3) ;
le sous-module d'obtention d'identificateur (420a1) est configuré pour obtenir un identificateur correspondant au canal de sortie audio courant ;
le sous-module de détection d'identificateur (420a2) est configuré pour détecter si l'identificateur correspondant au canal de sortie audio courant existe dans un ensemble d'identificateurs préréglé ;
le sous-module de détermination de canal (420a3) est configuré pour déterminer que le canal de sortie audio courant appartient au canal de sortie audio préréglé si l'identificateur correspondant au canal de sortie audio courant existe dans l'ensemble d'identificateurs préréglé.

9. Appareil selon la revendication 8, dans lequel le premier sous-module de détection (420a) comprend en outre un sous-module d'affichage d'interface (420a4), un sous-module d'obtention d'instruction (420a5) et un sous-module d'ajout d'identificateur (420a6) ;
le sous-module d'affichage d'interface (420a4) est configuré pour afficher une interface de réglage de canaux, l'interface de réglage de canaux comprenant au moins un canal de sortie audio ;
le sous-module d'obtention d'instruction (420a5) est configuré pour obtenir une instruction de sélection correspondant à un canal de sortie audio cible ;
le sous-module d'ajout d'identificateur (420a6) est configuré pour ajouter un identificateur correspondant au canal de sortie audio cible dans l'ensemble d'identificateurs préréglé.

10. Appareil selon l'une quelconque des revendications 8 à 10, dans lequel le deuxième sous-module de détection (420b) comprend en outre au moins l'un d'entre un sous-module de détection de nom de fichier (420b 1) et un sous-module de détection audio (420b2) ;
le sous-module de détection de nom de fichier (420b 1) est configuré pour obtenir un nom de fichier du fichier multimédia, pour détecter si le nom de fichier comprend un premier mot clé préréglé, et pour déterminer que le contenu du fichier multimédia appartient au type cible de contenu de fichiers multimédia si le nom de fichier comprend le premier mot clé préréglé ;
le sous-module de détection audio (420b2) est configuré pour extraire au moins une séquence de données audio du fichier multimédia, pour détecter si la au moins une séquence de données audio comprend un deuxième mot clé préréglé par une technologie de reconnaissance vocale, et pour déterminer que le contenu du fichier multimédia appartient au type cible de contenu de fichiers multimédia si la au moins une séquence de données audio comprend le deuxième mot clé préréglé.

11. Produit de programme ayant des instructions stockées dessus qui, lorsque exécutées par un processeur d'un dispositif, font que le dispositif mette en œuvre le procédé de commande de lecture audio selon l'une quelconque des revendications 1 à 5.

12. Programme informatique, qui lorsque exécuté sur un processeur, met en œuvre le procédé de lecture audio selon l'une quelconque des revendications 1 à 5.
